# EUROPÄISCHE PATENTSCHRIFT

(11) **EP 0 760 299 B1**
(45) Veröffentlichungstag und Bekanntmachung des Hinweises auf die Patenterteilung: **31.03.1999**
(21) Anmeldenummer: 96112344.5
(22) Anmeldetag: 31.07.1996
(51) Int. Cl.: B60C 23/04

(54) **Vorrichtung für Reifenfülldruck-Kontrollsystem in Kraftfahrzeuge**
Device for tyre pressure control system in motor vehicles
Dispositif pour un système de surveillance de pression d'un pneumatique d'une voiture automobile

(30) Priorität: 01.09.1995 DE 19532386
(43) Veröffentlichungstag der Anmeldung: 05.03.1997
(73) Patentinhaber: Bayerische Motoren Werke Aktiengesellschaft, 80788 München (DE)
(72) Erfinder: Ellmann, Manfred, 84172 Buch am Erlbach (DE)

(56) Entgegenhaltungen:
- WO-A-87/03254
- DE-A- 2 549 946
- GB-A- 1 058 162
- US-A- 4 253 212
- US-A- 4 311 888

## Beschreibung

Die Erfindung bezieht sich auf eine Vorrichtung für Reifenfülldruck-Kontrollsysteme in Kraftfahrzeugen nach dem Oberbegriff des Patentanspruchs 1.

Eine derartige Vorrichtung ist beispielsweise aus der DE 41 29 554 A1 bekannt. Derartige Vorrichtungen weisen insbesondere im Inneren des Reifens eines jeden Rades Sensorvorrichtungen auf. Diese Sensorvorrichtungen erfassen beispielsweise den Luftdruck und/oder die Temperatur im Inneren des Reifens, wandeln diese physikalischen Größen in eine entsprechende Spannung um und übermitteln diese Informationen an eine im Fahrzeug angeordnete stillstehende Auswertevorrichtung. Diese Informationsübermittlung findet vorzugsweise über Transponder drahtlos statt.

Werden beispielsweise die Informationen 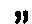 Reifenfülldruck" und 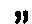 Temperatur" an die Auswertevorrichtung übermittelt, vergleicht die Auswertevorrichtung den Reifenfülldruck z. B. mit einem von der Temperatur abhängigen minimal zulässigen Schwellwert. Wird dieser minimal zulässige Schwellwert unterschritten, kann über die Auswertevorrichtung dem Fahrer angezeigt werden, welches Rad einen zu geringen Reifenfülldruck aufweist. Hierzu muß der Auswertevorrichtung zumindest einmal mitgeteilt werden, welche Sensorvorrichtung welchem Rad zugeordnet ist.

Es ist beispielsweise bekannt, die Auswertevorrichtung mittels eines Schalters in einen Lernmodus zu versetzen. In diesem Lernmodus zeigt eine Anzeige an, an welches Rad, z. B. vorne links, ein Permanentmagnet an die Sensorvorrichtung gehalten werden muß, um die Sensorvorrichtung beispielsweise zum Senden eines Identifizierungscodes zu veranlassen. Hierdurch ordnet die Auswertevorrichtung die entsprechende Sensorvorrichtung dem jeweils angezeigten Rad zu.

Bei einem derartigen Verfahren ist ein sehr starker Permanentmagnet nötig, der beispielsweise in der Umgebung befindliche Elektronikgeräte stören kann. Darüber hinaus ist ein derartiges manuelles Verfahren äußerst aufwendig. Bei Stahlrädern ist dieses Verfahren darüber hinaus nicht möglich, da das von dem Dauermagneten ausgestrahlte Magnetfeld durch die Stahlfelgen kurzgeschlossen wird.

Es ist Aufgabe der Erfindung, eine Vorrichtung eingangs genannter Art derart zu verbessern, daß der Lernmodus für die Auswertevorrichtung zur radbezogenen Zuordnung der Sensorvorrichtungen vereinfacht bzw. automatisiert wird.

Diese Aufgabe wird durch die kennzeichnenden Merkmale des Patentanspruchs 1 gelöst.

Erfindungsgemäß weist jede Sensorvorrichtung einen Sensor zur Erfassung der Drehrichtung des ihr zugeordneten Rades auf und übermittelt die Information der Drehrichtung an die Auswertevorrichtung.

Dieser Erfindung liegt der Gedanke zugrunde, daß durch die Information der Drehrichtung zumindest je zwei Sensorvorrichtungen die Räder einer Fahrzeuglängsseite zugeordnet werden können. Zur Erfassung der Drehrichtung eines Rades kann als Sensor beispielsweise ein Rollschalter oder ein Tangentialbeschleunigungsaufnehmer, der die Richtung der Umfangsbeschleunigung des Rades mißt, verwendet werden.

Ist zur Drehrichtung der Räder hinzu auch die Fahrtrichtung des Fahrzeuges bekannt, können je zwei Sensorvorrichtungen einer bestimmten Fahrzeuglängsseite zugeordnet werden. Somit könnte dem Fahrer zumindest mitgeteilt werden, ob zu wenig Reifenfülldruck auf der linken oder auf der rechten Seite des Fahrzeuges vorherrscht. Zur Ermittlung der Fahrtrichtung kann die Auswertevorrichtung beispielsweise einen Vergleich der gemittelten Zeitspannen in beide Drehrichtungen vornehmen. Erfahrungsgemäß ist die Drehrichtung, deren gemittelte Zeitspanne größer als die der anderen Drehrichtung ist, die Vorwärtsfahrt des Kraftfahrzeugs.

Somit ist eine einfache automatische Zuordnung der Sensorvorrichtung zumindest zu einer bestimmten Fahrzeuglängsseite möglich. Um auch eine Zuordnung der Sensorvorrichtung einem vorderen oder einem hinteren Rad zu ermöglichen, werden beispielsweise, wie bereits bekannt, die Fülldruckwerte, die durch die Sensorvorrichtungen ohnehin erfaßt und übermittelt werden, verglichen. Üblicherweise sind die Soll-Fülldruckwerte an der Vorderachse niedriger als die Soll-Fülldruckwerte an der Hinterachse. Hierdurch kann bei ordnungsgemäß befüllten Reifen unterschieden werden, ob eine Sensorvorrichtung an einem vorderen oder an einem hinteren Rad angeordnet ist. Durch eine Kombination mit der Information der Drehrichtung der Räder, ist hierdurch nicht nur die Zuordnung der Sensorvorrichtungen einer bestimmten Fahrzeuglängsseite sondern einem definierten Rad möglich.

Eine vorteilhafte Weiterbildung der Erfindung ist der Gegenstand des Patentanspruchs 2.
Erfindungsgemäß erhält die Auswertevorrichtung zusätzlich ein Signal zur Erfassung der Fahrtrichtung des Fahrzeugs. Durch ein zusätzliches Signal zur Erfassung der Fahrtrichtung des Fahrzeugs ist eine schnellere Erkennung der Zuordnung der Sensorvorrichtung zu einer bestimmen Fahrzeuglängsseite möglich. Ein derartiges zusätzliches Signal kann beispielsweise durch das Rückfahrlicht oder die Position 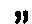 R" bei Automatikgetrieben erzeugt werden.

Hierdurch ist eine schnelle Erkennung der Fahrtrichtung mit ohnehin im Fahrzeug vorhandenen Signalen als zusätzliches Signal für die Auswertevorrichtung möglich.

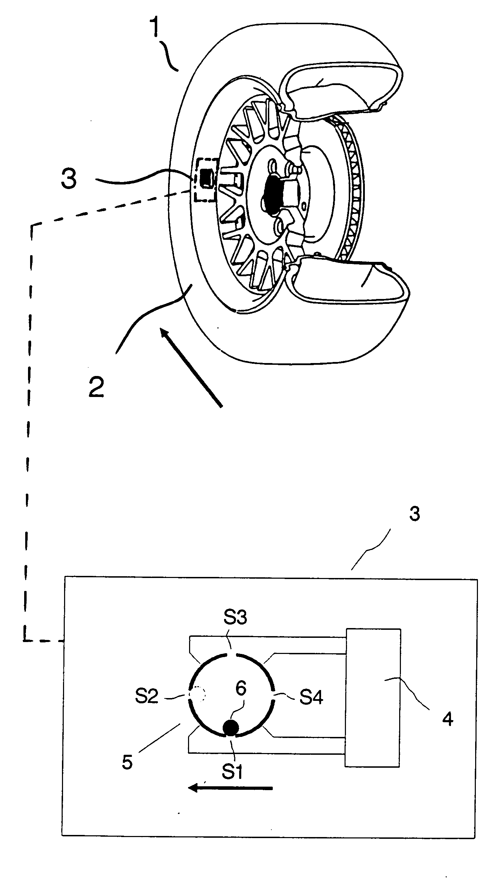

In der Zeichnung ist ein Ausführungsbeispiel der Erfindung dargestellt. Sie zeigt eine mögliche erfindungsgemäße Vorrichtung zur Erfassung der Drehrichtung eines Rades.

In der Figur ist beispielsweise das linke vordere Rad 1 mit einem Reifen 2 dargestellt. Innerhalb des Reifens 2 ist eine Sensorvorrichtung 3 angeordnet. Die Sensorvorrichtung 3 kommuniziert beispielsweise drahtlos mit einer hier nicht dargestellten Auswertevorrichtung.

Im unteren Teil der Figur ist die Sensorvorrichtung 3 vergrößert dargestellt. Zu den physikalischen Größen im Inneren des Reifens, wie z. B. dem Reifenfülldruck und/oder der Temperatur, erfaßt die Sensorvorrichtung 3 zusätzlich mittels des Sensors 4, 5, 6 die Drehrichtung des Rades 1. Der Sensor zur Erfassung der Drehrichtung des Rades 1 besteht aus einem Rollschalter 5 mit einer Kugel 6 und einer Schaltfolgenerfassungseinheit 4. Die beiden in der Figur eingetragenen Pfeile zeigen die Fahrtrichtung des Fahrzeuges an. Da hier beispielsweise das Rad 1 das linke vordere Rad darstellt, befindet sich das hier nicht dargestellte Fahrzeug in Vorwärtsfahrt. Der Rollschalter 5 ist am Rad 1 derart angebracht, daß er eine Drehrichtung nach links oder rechts bezogen auf die Drehachse des Rades anzeigt. Im dargestellten Beispiel dreht sich das linke vordere Rad 1 während einer Vorwärtsfahrt des Kraftfahrzeugs nach links. Die Kugel 6 im Rollschalter 5 schließt demnach nacheinander die Schalter S1, S2, S3, S4, S1.... . Die Schaltfolgenerfassungseinheit 4 erkennt durch diese Reihenfolge die Drehrichtung 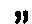 links" und übermittelt diese Information an die hier nicht dargestellte Auswertevorrichtung. Erhält beispielsweise die Auswertevorrichtung zusätzlich das Signal des Rückfahrlichts, würde sie bei Vorwärtsfahrt durch das ausgeschaltete Rückfahrlicht erkennen, daß die Sensorvorrichtung 3 dem linken vorderen Rad 1 oder dem hier nicht dargestellten linken hinteren Rad zugeordnet ist. Da die Sensorvorrichtung 3 zusätzlich ohnehin den Reifenfülldruck im Reifen 2 an die Auswertevorrichtung übermittelt, erkennt die Auswertevorrichtung am Wert dieses Reifenfülldruckes, der am Vorderrad üblicherweise niedriger als am Hinterrad ist, daß die Sensorvorrichtung 3 am linken vorderen Rad 1 angeordnet ist.

Würde die Sensorvorrichtung 3 an einem Rad an der rechten Fahrzeuglängsseite angeordnet sein, würde die Auswertevorrichtung die Drehrichtung 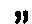 rechts" durch den Rollschalter 5 erhalten. Der Rollschalter 5 würde an einem Rad auf der rechten Seite des Fahrzeuges bei Vorwärtsfahrt derart angeordnet sein, daß die Kugel 6 nacheinander die Schalter S1, S4, S3, S2, S1 ..... schließt.

Durch dieses erfindungsgemäße Ausführungsbeispiel ist eine sehr einfache automatisierte Zuordnung einer Sensorvorrichtung zu einem bestimmten Rad eines Kraftfahrzeuges möglich.

Ergänzend wird darauf hingewiesen, daß zur Erfassung der Drehrichtung eines Rades auch andere Sensoren, wie z. B. Tangential- und/oder Radialbeschleunigungsaufnehmer verwendet werden können. Darüber hinaus kann anstelle der Ermittlung der Druckunterschiede auch ein anderes Verfahren zur Unterscheidung eines vorderen und hinteren Rades vorgenommen werden, das mit dem erfindungsgemäßen Verfahren zur Unterscheidung der Fahrzeuglängsseiten kombiniert werden kann.

## Patentansprüche

1. Vorrichtung für Reifenfülldruck-Kontrollsysteme in Kraftfahrzeugen mit Sensorvorrichtungen an jedem Rad, die Informationen an eine im Fahrzeug angeordnete Auswertevorrichtung übermitteln, dadurch gekennzeichnet, daß jede Sensorvorrichtung (3) einen Sensor (4, 5, 6) zur Erfassung der Drehrichtung des ihr zugeordneten Rades (1) aufweist und die Information der Drehrichtung an die Auswertevorrichtung übermittelt.

2. Vorrichtung nach Patentanspruch 1, dadurch gekennzeichnet, daß die Auswertevorrichtung zusätzlich ein Signal zur Erfassung der Fahrtrichtung des Fahrzeugs erhält.

## Claims

1. A device for tyre pressure monitoring systems in motor vehicles, comprising sensor devices on each wheel for transmitting information to an evaluating device disposed in the vehicle, **characterised in that** each sensor device (3) comprises a sensor (4, 5, 6) for detecting the direction of rotation of the wheel (1) associated therewith, and transmits information regarding the direction of rotation to the evaluating device.

2. A device according to claim 1, **characterised in that** the evaluating device additionally receives a signal for detecting the direction of travel of the vehicle.

## Revendications

1. Dispositif pour des systèmes de contrôle de la pression dans les pneumatiques de véhicules à moteur avec des dispositifs de détection sur chaque roue, qui transmettent des informations à un dispositif d'exploitation, qui est disposé dans le véhicule,
caractérisé en ce que
chaque dispositif de détection (3) présente un détecteur (4, 5, 6) qui sert à détecter le sens de rotation de la roue (1) qui lui est associée, et transmet l'information relative du sens de rotation au dispositif d'exploitation.

2. Dispositif selon la revendication 1,
caractérisé en ce que
le dispositif d'exploitation reçoit en plus un signal qui sert à détecter le sens de marche du véhicule.
